# EUROPÄISCHE PATENTANMELDUNG

(11) **EP 3 837 964 A1**
(43) Veröffentlichungstag der Anmeldung: **23.06.2021**
(21) Anmeldenummer: 20214847.4
(22) Anmeldetag: 17.12.2020
(51) Int. Cl.: A01G 3/08, A01G 3/00, A01G 20/47, A47L 9/28

(54) **VERFAHREN ZUM BESTIMMEN EINER ANWESENHEIT EINES MOTORANGETRIEBENEN WERKZEUGS INNERHALB EINES WERKZEUG-POSITIONSBEREICHS UND/ODER EINER WERKZEUG-POSITION DES WERKZEUGS, VERFAHREN FÜR EIN VERFAHREN ZUM BESTIMMEN EINER ANWESENHEIT EINES MOTORANGETRIEBENEN WERKZEUGS INNERHALB EINES WERKZEUG-POSITIONSBEREICHS UND/ODER EINER WERKZEUG-POSITION DES WERKZEUGS, SYSTEM ZUM BESTIMMEN EINER ANWESENHEIT EINES MOTORANGETRIEBENEN WERKZEUGS INNERHALB EINES WERKZEUG-POSITIONSBEREICHS UND/ODER EINER WERKZEUG-POSITION DES WERKZEUGS**

(30) Priorität: 20.12.2019 EP 19218565
(71) Anmelder: Andreas Stihl AG & Co. KG, 71336 Waiblingen (DE)
(72) Erfinder: BÖKER, Robert, 71336 Waiblingen (DE)
(74) Vertreter: Patentanwälte Ruff, Wilhelm, Beier, Dauster & Partner mbB

(57) **Zusammenfassung**

Die Erfindung bezieht sich auf ein Verfahren zum Bestimmen einer Anwesenheit eines motorangetriebenen Werkzeugs (1) innerhalb eines Werkzeug-Positionsbereichs (POB) und/oder einer Werkzeug-Position (PO1) des Werkzeugs (1), wobei mit dem Werkzeug (1) ein Sender (2) mechanisch verbunden ist, wobei der Sender (2) ein Signal (SI) kabellos sendet, wobei das gesendete Signal (SI) durch das Werkzeug (1) gedämpft wird und eine Sender-Information (Slnfo) für eine Berücksichtigung der Dämpfung aufweist, wobei das Verfahren die Schritte aufweist:
a) Erfassen eines jeweiligen Empfangs-Signalstärkewerts (SIWa-d) des gesendeten Signals (SI) an Empfängern (3a-d), wobei die Empfänger (3a-d) an verschiedenen Empfänger-Positionen (PO3a-d) angeordnet sind, und
b) Bestimmen der Anwesenheit des Werkzeugs (1) innerhalb des Werkzeug-Positionsbereichs (POB) und/oder der Werkzeug-Position (PO1) des Werkzeugs (1) in Abhängigkeit der erfassten Empfangs-Signalstärkewerte (SIWa-d) und der empfangenen Sender-Information (Slnfo) für die Berücksichtigung der Dämpfung.

## Beschreibung

### ANWENDUNGSGEBIET UND STAND DER TECHNIK

Die Erfindung bezieht sich auf ein Verfahren zum Bestimmen einer Anwesenheit eines motorangetriebenen Werkzeugs innerhalb eines Werkzeug-Positionsbereichs und/oder einer Werkzeug-Position des Werkzeugs, ein Verfahren für ein Verfahren zum Bestimmen einer Anwesenheit eines motorangetriebenen Werkzeugs innerhalb eines Werkzeug-Positionsbereichs und/oder einer Werkzeug-Position des Werkzeugs, ein System zum Bestimmen einer Anwesenheit eines motorangetriebenen Werkzeugs innerhalb eines Werkzeug-Positionsbereichs und/oder einer Werkzeug-Position des Werkzeugs, ein motorangetriebenes Werkzeug und einen Sender und eine Vorrichtung für ein System zum Bestimmen einer Anwesenheit eines motorangetriebenen Werkzeugs innerhalb eines Werkzeug-Positionsbereichs und/oder einer Werkzeug-Position des Werkzeugs.

### AUFGABE UND LÖSUNG

Der Erfindung liegt als Aufgabe die Bereitstellung eines Verfahrens zum Bestimmen einer Anwesenheit eines motorangetriebenen Werkzeugs innerhalb eines Werkzeug-Positionsbereichs und/oder einer Werkzeug-Position des Werkzeugs, eines Verfahren für ein Verfahren zum Bestimmen einer Anwesenheit eines motorangetriebenen Werkzeugs innerhalb eines Werkzeug-Positionsbereichs und/oder einer Werkzeug-Position des Werkzeugs, eines Systems zum Bestimmen einer Anwesenheit eines motorangetriebenen Werkzeugs innerhalb eines Werkzeug-Positionsbereichs und/oder einer Werkzeug-Position des Werkzeugs, eines motorangetriebenen Werkzeugs und eines Senders und einer Vorrichtung für ein System zum Bestimmen einer Anwesenheit eines motorangetriebenen Werkzeugs innerhalb eines Werkzeug-Positionsbereichs und/oder einer Werkzeug-Position des Werkzeugs zugrunde, das und/oder die jeweils verbesserte Eigenschaft aufweist/aufweisen, insbesondere eine hohe Genauigkeit ermöglicht/ermöglichen.

Die Erfindung löst diese Aufgabe durch die Bereitstellung eines Verfahrens mit den Merkmalen des Anspruchs 1, eines Verfahrens mit den Merkmalen des Anspruchs 11, eines Systems mit den Merkmalen des Anspruchs 12, eines motorangetriebenen Werkzeugs und eines Senders mit den Merkmalen des Anspruchs 14 und/oder einer Vorrichtung mit den Merkmalen des Anspruchs 15. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Bestimmen bzw. Ermitteln einer Anwesenheit eines motorangetriebenen Werkzeugs innerhalb eines Werkzeug-Positionsbereichs und/oder einer Werkzeug-Position des Werkzeugs ausgebildet bzw. konfiguriert. Mit dem Werkzeug ist ein Sender, insbesondere unmittelbar, mechanisch verbunden bzw. an dem Werkzeug ist der Sender befestigt. Der Sender sendet kabellos ein Signal. Das gesendete Signal wird durch das Werkzeug, insbesondere werkzeugtypspezifisch, gedämpft bzw. mindestens teilweise abgeschirmt und umfasst bzw. weist eine Sender-Information für eine Berücksichtigung der, insbesondere werkzeugtypspezifischen, Dämpfung auf. Das Verfahren umfasst bzw. weist die Schritte auf: a) Erfassen, insbesondere automatisches Erfassen, eines jeweiligen Empfangs-Signalstärkewerts des gesendeten, insbesondere und gegebenenfalls gedämpften, Signals an Empfängern. Die Empfänger sind an verschiedenen Empfänger-Positionen, insbesondere stationär, angeordnet bzw. räumlich verteilt. b) Bestimmen, insbesondere automatisches Bestimmen, bzw. Ermitteln der Anwesenheit, insbesondere oder einer Abwesenheit, des Werkzeugs innerhalb des Werkzeug-Positionsbereichs und/oder der Werkzeug-Position, insbesondere Positionskoordinaten der Werkzeug-Position, des Werkzeugs in Abhängigkeit der erfassten Empfangs-Signalstärkewerte und der empfangenen Sender-Information für die Berücksichtigung der Dämpfung.

Dies ermöglicht die Dämpfung zu berücksichtigen. Somit ermöglicht dies, die Anwesenheit des Werkzeugs innerhalb des Werkzeug-Positionsbereichs und/oder die Werkzeug-Position des Werkzeugs mit einer hohen Genauigkeit zu bestimmen. Somit kann dies einen zeitlich schnellen und somit einen effizienten Prozess mit dem Werkzeug ermöglichen, z.B. in einer Werkstatt, insbesondere bei einer Service- und/oder Reparaturannahme. Somit kann dies einen kostengünstigen und somit kundenfreundlichen Service und/oder eine kostengünstige und somit kundenfreundliche Reparatur des Werkzeugs ermöglichen.

Insbesondere kann das Werkzeug ein Garten-, Forst- und/oder Baubearbeitungswerkzeug sein. Zusätzlich oder alternativ kann das Werkzeug ein handgeführtes, insbesondere handgetragenes oder bodengeführtes, Werkzeug sein. Insbesondere kann handgeführtes, insbesondere handgetragenes, Werkzeug bedeuten, dass das Werkzeug eine maximale Masse von 50 Kilogramm (kg), insbesondere von 20 kg, insbesondere von 10 kg, aufweisen kann.

Der Werkzeug-Positionsbereich kann eine Fläche, insbesondere eine Annahmefläche, wie z.B. ein Tresen, oder eine Gitterbox sein. Zusätzlich oder alternativ kann der Werkzeug-Positionsbereich, insbesondere die Gitterbox, teilweise oder vollständig aus mindestens einem nicht dämpfenden Stoff, insbesondere einem Kunststoff, bestehen. Weiter zusätzlich oder alternativ kann der Werkzeug-Positionsbereich ein begrenzter Werkzeug-Positionsbereich sein.

Mit dem Werkzeug kann der Sender werkseitig oder nachgerüstet mechanisch verbunden sein. Zusätzlich oder alternativ kann der Sender ein Teil des Werkzeugs sein, wobei mit anderen Teilen des Werkzeugs der Sender mechanisch verbunden sein kann. Alternativ kann der Sender getrennt von dem Werkzeug ausgebildet sein. Dies ermöglicht eine Nachrüstung des Senders an dem Werkzeug. Insbesondere kann das Werkzeug, insbesondere nur, eine, insbesondere einzige, werkseitig vorgegebene mechanische Verbindungsstelle zum mechanischen Verbinden zum Nachrüsten des Senders aufweisen. Insbesondere kann der Schritt b) unter der Annahme, dass mit dem Werkzeug der Sender an der mechanischen Verbindungsstelle mechanisch verbunden ist, ausgeführt werden.

Das Verfahren kann den Schritt aufweisen: Senden, insbesondere automatisches und/oder wiederholtes Senden, des Signals. Zusätzlich oder alternativ kann das, insbesondere gesendete, Signal ungerichtet sein. Weiter zusätzlich oder alternativ kann die Sender-Information werkseitig vorgegeben sein. Weiter zusätzlich oder alternativ kann die Sender-Information in einem Speicher des Senders und/oder des Werkzeugs hinterlegt sein. Weiter zusätzlich oder alternativ kann das Signal Betriebsdaten des Werkzeugs aufweisen. Insoweit sei auch auf die einschlägige Fachliteratur verwiesen.

Das Verfahren kann den Schritt aufweisen: jeweils Empfangen, insbesondere automatisches Empfangen, des gesendeten Signals, soweit nicht vollständig gedämpft, mittels der Empfänger. Insbesondere kann der Schritt a) aufweisen: Erfassen des jeweiligen Empfangs-Signalstärkewerts des jeweils empfangenen Signals. Zusätzlich oder alternativ kann das empfangene Signal ungedämpft sein. Weiter zusätzlich oder alternativ kann einer der Empfangs-Signalstärkewerte Null sein, insbesondere soweit das gesendete Signal vollständig gedämpft ist.

Der Schritt b) kann aufweisen: Bestimmen der Anwesenheit des Werkzeugs innerhalb des Werkzeug-Positionsbereichs und/oder der Werkzeug-Position des Werkzeugs in Abhängigkeit der erfassten Empfangs-Signalstärkewerte mittels Lateration und/oder Hyperbelortung. Insoweit sei auch auf die einschlägige Fachliteratur verwiesen.

Der Schritt b) kann zeitlich nach dem Schritt a) ausgeführt werden.

Das Verfahren kann den Schritt aufweisen: Ausgeben, insbesondere automatisches Ausgeben, einer benutzerwahrnehmbaren Information über die, insbesondere bestimmte, Anwesenheit des Werkzeugs innerhalb des Werkzeug-Positionsbereichs und/oder die, insbesondere bestimmte, Werkzeug-Position des Werkzeugs, insbesondere bei Anwesenheit des Werkzeugs innerhalb des Werkzeug-Positionsbereichs.

In einer Weiterbildung der Erfindung ist das Werkzeug eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, insbesondere ein Rasenmähroboter, ein Aufsitzrasenmäher oder ein Rasenmähtraktor, ein Vertikutierer, eine Grasschere, ein Häcksler, ein Gesteinsschneider, ein Hochdruckreiniger oder ein Spritz- und/oder Sprühgerät.

In einer Weiterbildung der Erfindung umfasst bzw. weist das Werkzeug ein Antriebsmotorsystem, insbesondere zum Antrieb des Werkzeugs, auf. Das gesendete Signal wird durch das Antriebsmotorsystem, insbesondere mindestens teilweise, gedämpft. Insbesondere kann das Antriebsmotorsystem ein Verbrennungsmotorantriebssystem und/oder ein Elektromotorantriebssystem sein. Insbesondere kann das gesendete Signal durch ein Kurbelgehäuse des Verbrennungsmotorantriebssystems gedämpft werden.

In einer Weiterbildung der Erfindung ist das, insbesondere gesendete, Signal ein Funksignal bzw. Radiosignal. Insbesondere kann das Funksignal eine Frequenz aus dem ISM-Band aufweisen. Insbesondere kann das Funksignal ein Bluetooth-Funksignal, insbesondere ein Bluetooth-Low-Energy-Funksignal, und/oder ein WLAN- bzw. Wi-Fi-Funksignal sein.

In einer Weiterbildung der Erfindung wird das gesendete Signal durch das Werkzeug anisotrop bzw. richtungsabhängig gedämpft. Somit können die Empfangs-Signalstärkewerte trotz möglicher gleicher räumlicher Abstände des Senders zu den Empfängern verschieden sein.

In einer Weiterbildung der Erfindung umfasst bzw. weist der Schritt a) auf: Erfassen eines jeweiligen Empfangs-Signalstärkewerts des gesendeten Signals an mindestens vier Empfängern. Die mindestens vier Empfänger sind an mindestens vier verschiedenen Empfänger-Positionen, insbesondere stationär, angeordnet bzw. räumlich verteilt. Dies ermöglicht die Anwesenheit des Werkzeugs innerhalb des Werkzeug-Positionsbereichs und/oder die Werkzeug-Position des Werkzeugs zu bestimmen, insbesondere mittels Lateration und/oder Hyperbelortung, auch wenn einer der Empfangs-Signalstärkewerte Null ist. Typischerweise sind mindestens drei der Empfangs-Signalstärkewerte größer Null.

In einer Weiterbildung der Erfindung umfasst bzw. weist die Sender-Information mindestens einen, insbesondere werkzeugtypspezifischen, Dämpfungswert der Dämpfung auf. Der Schritt b) umfasst bzw. weist auf: Bestimmen der Anwesenheit des Werkzeugs innerhalb des Werkzeug-Positionsbereichs und/oder der Werkzeug-Position des Werkzeugs in Abhängigkeit des mindestens einen empfangenen Dämpfungswerts der Dämpfung. Dies ermöglicht die Dämpfung zu berücksichtigen. Insbesondere kann der mindestens eine Dämpfungswert eine Dämpfungswertmatrix in einem Koordinatensystem des Werkzeugs sein. Zusätzlich oder alternativ kann der mindestens eine Dämpfungswert werkseitig vorgegeben sein. Weiter zusätzlich oder alternativ kann der mindestens eine Dämpfungswert in einem Speicher des Senders und/oder des Werkzeugs hinterlegt sein.

In einer Weiterbildung der Erfindung umfasst bzw. weist die Sender-Information einen, insbesondere eindeutigen, Identifikator des Senders und/oder des Werkzeugs auf. Dem Identifikator ist eine, insbesondere werkzeugtypspezifische, Dämpfungs-Information basierend auf der Dämpfung, insbesondere mindestens ein, insbesondere werkzeugtypspezifischer, Dämpfungswert der Dämpfung, insbesondere logisch, zugeordnet, insbesondere in einer Datenbank. Der Schritt b) umfasst bzw. weist auf: Ermitteln, insbesondere automatisches Ermitteln, der Dämpfungs-Information basierend auf der Dämpfung in Abhängigkeit des empfangenen Identifikators, insbesondere von der Datenbank, und Bestimmen der Anwesenheit des Werkzeugs innerhalb des Werkzeug-Positionsbereichs und/oder der Werkzeug-Position des Werkzeugs in Abhängigkeit der ermittelten Dämpfungs-Information, insbesondere des mindestens einen ermittelten Dämpfungswerts der Dämpfung. Dies ermöglicht die Dämpfung zu berücksichtigen. Zusätzlich kann der Identifikator bei einer Annahme des Werkzeugs zur Erstellung bzw. Generierung eines Service- und/oder Reparaturauftrages verwendet werden. Somit kann dies einen zeitlich schnellen und somit einen effizienten Prozess mit dem Werkzeug ermöglichen. Insbesondere kann der Identifikator eine MAC-Adresse und/oder eine Seriennummer aufweisen, insbesondere sein. Zusätzlich oder alternativ kann der Identifikator werkseitig vorgegeben sein. Weiter zusätzlich oder alternativ kann der Identifikator in einem Speicher des Werkzeugs und/oder des Senders hinterlegt sein. Weiter zusätzlich oder alternativ kann die Dämpfungs-Information werkseitig vorgegeben sein. Weiter zusätzlich oder alternativ kann der mindestens eine Dämpfungswert eine Dämpfungswertmatrix in einem Koordinatensystem des Werkzeugs sein.

In einer Weiterbildung, insbesondere einer Ausgestaltung, der Erfindung umfasst bzw. weist das Verfahren den Schritt auf: Vorgeben, insbesondere automatisches Vorgeben, mindestens eines, insbesondere des mindestens einen und/oder werkzeugtypspezifischen, Dämpfungswerts der Dämpfung und der verschiedenen Empfänger-Positionen, insbesondere Positionskoordinaten der Empfänger-Positionen, der Empfänger. Der Schritt b) umfasst bzw. weist auf: Berechnen, insbesondere automatisches Berechnen, der Werkzeug-Position des Werkzeugs in Abhängigkeit der erfassten Empfangs-Signalstärkewerte, des mindestens einen vorgegebenen Dämpfungswerts der Dämpfung und der vorgegebenen verschiedenen Empfänger-Positionen der Empfänger, insbesondere mittels Lateration und/oder Hyperbelortung. Dies ermöglicht die Dämpfung zu berücksichtigen. Insbesondere kann das Vorgeben des mindestens einen Dämpfungswerts das Senden oder das Ermitteln des mindestens einen Dämpfungswerts aufweisen. Zusätzlich oder alternativ kann der mindestens eine Dämpfungswert eine Dämpfungswertmatrix in einem Koordinatensystem des Werkzeugs sein. Weiter zusätzlich oder alternativ können/kann der mindestens eine Dämpfungswert und/oder die verschiedenen Empfänger-Positionen werkseitig vorgegeben sein.

In einer Weiterbildung, insbesondere einer Ausgestaltung, der Erfindung umfasst bzw. weist das Verfahren den Schritt auf: Vorgeben, insbesondere automatisches Vorgeben, für verschiedene mögliche Werkzeug-Positionen, insbesondere und jeweils verschiedene mögliche Werkzeug-Ausrichtungen bzw. Werkzeug-Orientierungen, des Werkzeugs, insbesondere innerhalb des Werkzeug-Positionsbereichs, jeweils, insbesondere logisch, zugeordnete, insbesondere werkzeugtypspezifische, Vergleichs-Empfangs-Signalstärkewerte. Zusätzlich oder alternativ umfasst bzw. weist die Sender-Information für die verschiedenen möglichen Werkzeug-Positionen, insbesondere und die verschiedenen möglichen Werkzeug-Ausrichtungen bzw. Werkzeug-Orientierungen, des Werkzeugs, insbesondere innerhalb des Werkzeug-Positionsbereichs, jeweils die, insbesondere logisch, zugeordneten Vergleichs-Empfangs-Signalstärkewerte auf. Der Schritt b) umfasst bzw. weist auf: Vergleichen, insbesondere automatisches Vergleichen, der erfassten Empfangs-Signalstärkewerte mit den Vergleichs-Empfangs-Signalstärkewerten und Bestimmen der Anwesenheit des Werkzeugs innerhalb des Werkzeug-Positionsbereichs und/oder der Werkzeug-Position des Werkzeugs in Abhängigkeit eines Ergebnisses des Vergleichs. Dies ermöglicht die Dämpfung zu berücksichtigen. Insbesondere kann die Dämpfungs-Information für die verschiedenen möglichen Werkzeug-Positionen, insbesondere und die verschiedenen möglichen Werkzeug-Ausrichtungen, jeweils die zugeordneten Vergleichs-Empfangs-Signalstärkewerte aufweisen. In anderen Worten: das Vorgeben für die verschiedenen möglichen Werkzeug-Positionen, insbesondere und die verschiedenen möglichen Werkzeug-Ausrichtungen, jeweils die zugeordneten Vergleichs-Empfangs-Signalstärkewerte kann ein Ermitteln für die verschiedenen möglichen Werkzeug-Positionen, insbesondere und die verschiedene möglichen Werkzeug-Ausrichtungen, jeweils der zugeordneten Vergleichs-Empfangs-Signalstärkewerte aufweisen. Weiter zusätzlich oder alternativ können für die verschiedenen möglichen Werkzeug-Positionen, insbesondere und die verschiedenen mögliche Werkzeug-Ausrichtungen, jeweils die zugeordneten Vergleichs-Empfangs-Signalstärkewerte werkseitig vorgegeben sein. Weiter zusätzlich oder alternativ kann das Bestimmen ein Auswählen der Vergleichs-Empfangs-Signalstärkewerte, welche den erfassten Empfangs-Signalstärkewerten am nächsten sind, und basierend darauf ein Auswählen der zugeordneten Werkzeug-Position, insbesondere und der zugeordneten Werkzeug-Ausrichtung, aufweisen. Weiter zusätzlich oder alternativ können für die verschiedenen möglichen Werkzeug-Positionen, insbesondere und die verschiedenen möglichen Werkzeug-Ausrichtungen, jeweils die zugeordneten Vergleichs-Empfangs-Signalstärkewerte mittels Kalibrierung gemessen werden und/oder sein.

In einer Ausgestaltung der Erfindung umfasst bzw. weist das Verfahren den Schritt auf: Vorgeben, insbesondere automatisches Vorgeben, mindestens eines, insbesondere des mindestens einen und/oder werkzeugtypspezifischen, Dämpfungswerts der Dämpfung und der verschiedenen Empfänger-Positionen, insbesondere Positionskoordinaten der Empfänger-Positionen, der Empfänger. Das Verfahren umfasst bzw. weist den Schritt auf: Berechnen, insbesondere automatisches Berechnen, für die verschiedenen möglichen Werkzeug-Positionen, insbesondere und die verschiedenen möglichen Werkzeug-Ausrichtungen, des Werkzeugs, insbesondere innerhalb des Werkzeug-Positionsbereichs, jeweils die Vergleichs-Empfangs-Signalstärkewerte in Abhängigkeit des mindestens einen vorgegebenen Dämpfungswerts der Dämpfung und der vorgegebenen verschiedenen Empfänger-Positionen der Empfänger, insbesondere mittels Lateration und/oder Hyperbelortung. Insbesondere kann das Vorgeben des mindestens einen Dämpfungswerts das Senden oder das Ermitteln des mindestens einen Dämpfungswerts aufweisen. Zusätzlich oder alternativ kann der mindestens eine Dämpfungswert eine Dämpfungswertmatrix in einem Koordinatensystem des Werkzeugs sein. Weiter zusätzlich oder alternativ können/kann der mindestens eine Dämpfungswert und/oder die verschiedenen Empfänger-Positionen werkseitig vorgegeben sein. Weiter zusätzlich oder alternativ können die verschiedenen möglichen Werkzeug-Positionen, insbesondere und die verschiedenen möglichen Werkzeug-Ausrichtungen, und jeweils die berechneten Vergleichs-Empfangs-Signalstärkewerte in dem Speicher des Senders und/oder des Werkzeugs und/oder der Datenbank hinterlegt werden und/oder sein.

In einer Weiterbildung der Erfindung wird das gesendete Signal durch ein weiteres Werkzeug, insbesondere werkzeugtypspezifisch, gedämpft bzw. mindestens teilweise abgeschirmt und umfasst bzw. weist die Sender-Information für eine Berücksichtigung der, insbesondere werkzeugtypspezifischen, Dämpfung durch das Werkzeug auf. Mit dem weiteren Werkzeug ist ein weiterer Sender, insbesondere unmittelbar, mechanisch verbunden bzw. an dem weiteren Werkzeug ist der weitere Sender befestigt. Der weitere Sender sendet kabellos ein weiteres Signal. Das gesendete weitere Signal wird durch das weitere Werkzeug und das Werkzeug, insbesondere jeweils werkzeugtypspezifisch, gedämpft bzw. mindestens teilweise abgeschirmt und umfasst bzw. weist eine weitere Sender-Information für eine Berücksichtigung der, insbesondere werkzeugtypspezifischen, Dämpfung durch das weitere Werkzeug auf. Das Verfahren umfasst bzw. weist den Schritt auf: Erfassen, insbesondere automatisches Erfassen, eines jeweiligen weiteren Empfangs-Signalstärkewerts des gesendeten, insbesondere und gegebenenfalls gedämpften, weiteren Signals an den Empfängern. Der Schritt b) umfasst bzw. weist auf: Bestimmen, insbesondere automatisches Bestimmen, der Werkzeug-Position des Werkzeugs in Abhängigkeit, insbesondere nur, der erfassten Empfangs-Signalstärkewerte und der empfangenen Sender-Information für die Berücksichtigung der Dämpfung durch das Werkzeug und Bestimmen, insbesondere automatisches Bestimmen, einer weiteren Werkzeug-Position des weiteren Werkzeugs in Abhängigkeit, insbesondere nur, der erfassten weiteren Empfangs-Signalstärkewerte und der empfangenen weiteren Sender-Information für die Berücksichtigung der Dämpfung durch das weitere Werkzeug, insbesondere wie zuvor beschrieben. Bestimmen, insbesondere automatisches Bestimmen, einer Positionsbestimmungsgenauigkeit jeweils für die bestimmte Werkzeug-Position des Werkzeugs und die bestimmte weitere Werkzeug-Position des weiteren Werkzeugs. Behalten für das eine Werkzeug mit einer höheren Positionsbestimmungsgenauigkeit die bestimmte Anwesenheit des einen Werkzeugs innerhalb des Werkzeug-Positionsbereichs und/oder der bestimmten einen Werkzeug-Position des einen Werkzeugs. Bestimmen, insbesondere automatisches und/oder erneutes Bestimmen, für das andere Werkzeug mit einer geringeren Positionsbestimmungsgenauigkeit die Anwesenheit des anderen Werkzeugs innerhalb des Werkzeug-Positionsbereichs und/oder der anderen Werkzeug-Position des anderen Werkzeugs unter Berücksichtigung der Dämpfung durch das eine Werkzeug an der bestimmten einen Werkzeug-Position, insbesondere und in Abhängigkeit der erfassten anderen Empfangs-Signalstärkewerte und der empfangenen anderen Sender-Information für die Berücksichtigung der Dämpfung durch das andere Werkzeug. Dies ermöglicht die Dämpfung durch die möglicherweise nah zu einander positionierten Werkzeuge zu berücksichtigen. Insbesondere kann eine hohe/geringe Positionsbestimmungsgenauigkeit durch eine geringe/hohe Abweichung der erfassten Empfangs-Signalstärkewerte von Vergleichs-Empfangs-Signalstärkewerten, welche den erfassten Empfangs-Signalstärkewerte am nächsten sind, definiert sein. Zusätzlich oder alternativ kann das Verfahren den Schritt aufweisen: Bestimmen für das eine Werkzeug mit der höheren Positionsbestimmungsgenauigkeit die Anwesenheit des einen Werkzeugs innerhalb des Werkzeug-Positionsbereichs, insbesondere wie zuvor beschrieben.

Das erfindungsgemäße, insbesondere automatische, Verfahren ist für ein, insbesondere das, Verfahren, insbesondere wie zuvor beschrieben, zum Bestimmen einer, insbesondere der, Anwesenheit eines, insbesondere des, motorangetriebenen Werkzeugs innerhalb eines, insbesondere des, Werkzeug-Positionsbereichs und/oder einer, insbesondere der, Werkzeug-Position des Werkzeugs ausgebildet bzw. konfiguriert. Mit dem Werkzeug ist ein, insbesondere der, Sender mechanisch verbunden. Der Sender sendet ein, insbesondere das, Signal kabellos. Das gesendete Signal wird durch das Werkzeug gedämpft und weist eine, insbesondere die, Sender-Information für eine, insbesondere die, Berücksichtigung der Dämpfung auf. Das Verfahren umfasst bzw. weist den Schritt auf: Bereitstellen, insbesondere automatisches Bereitstellen, mindestens einer, insbesondere der, Dämpfungs-Information basierend auf der Dämpfung, insbesondere mindestens eines, insbesondere des, Dämpfungswerts der Dämpfung, insbesondere wobei der Dämpfungs-Information ein, insbesondere der, Identifikator des Senders und/oder des Werkzeugs oder eine dem Identifikator korrespondierende Identifikatorinformation, insbesondere logisch, zugeordnet ist, insbesondere wobei die Sender-Information den Identifikator oder die Identifikatorinformation aufweist.

Dies kann den/die Vorteil/e wie zuvor beschrieben ermöglichen.

Insbesondere braucht oder kann das Verfahren nicht einen, insbesondere den/die, Schritt/e a) und/oder b) aufweisen. Insbesondere kann der Schritt b) das Bereitstellen aufweisen. Zusätzlich oder alternativ kann das Bereitstellen zeitlich nach dem Schritt a) und/oder zeitlich vor dem Schritt b) ausgeführt werden. Weiter zusätzlich oder alternativ kann die Dämpfungs-Information mittels bzw. von einer, insbesondere der, Datenbank bereitgestellt werden. Weiter zusätzlich oder alternativ kann das Verfahren den Schritt aufweisen: Übertragen, insbesondere automatisches Übertragen und/oder Senden, der, insbesondere bereitgestellten, Dämpfungs-Information, insbesondere mittels bzw. von einer, insbesondere der, Datenbank. Weiter zusätzlich oder alternativ kann das Verfahren den Schritt aufweisen: Übertragen, insbesondere automatisches Übertragen und/oder Empfangen, des Identifikators oder der Identifikatorinformation, insbesondere von mindestens einem der Empfänger, und, insbesondere Ermitteln und, Bereitstellen der Dämpfungs-Information in Abhängigkeit des, insbesondere übertragenen, Identifikators oder der, insbesondere übertragenen, Identifikatorinformation, insbesondere mittels bzw. von einer, insbesondere der, Datenbank. Weiter zusätzlich oder alternativ kann das Verfahren den Schritt aufweisen: Ermitteln, insbesondere automatisches Ermitteln, bzw. Auswählen der Identifikatorinformation basierend auf dem, insbesondere übertragenen, Identifikator, insbesondere mittels bzw. in einer, insbesondere der, Datenbank. Weiter zusätzlich oder alternativ kann die Dämpfungs-Information für verschiedene mögliche, insbesondere die verschiedenen möglichen, Werkzeug-Positionen, insbesondere und verschiedene mögliche, insbesondere die verschiedenen möglichen, Werkzeug-Ausrichtungen, jeweils, insbesondere logisch, zugeordnete, insbesondere die zugeordneten, Vergleichs-Empfangs-Signalstärkewerte aufweisen. Weiter zusätzlich oder alternativ können/kann die Dämpfungs-Information und/oder der Identifikator und/oder die Identifikatorinformation in einer, insbesondere der, Datenbank hinterlegt sein.

Das erfindungsgemäße, insbesondere elektrische, System ist zum, insbesondere automatischen, Bestimmen bzw. Ermitteln einer, insbesondere der, Anwesenheit eines, insbesondere des, motorangetriebenen Werkzeugs innerhalb eines, insbesondere des, Werkzeug-Positionsbereichs und/oder einer, insbesondere der, Werkzeug-Position des Werkzeugs ausgebildet bzw. konfiguriert. Mit dem Werkzeug ist ein, insbesondere der, Sender, insbesondere unmittelbar, mechanisch verbunden bzw. an dem Werkzeug ist der Sender befestigt. Der Sender sendet kabellos ein, insbesondere das, Signal. Das gesendete Signal wird durch das Werkzeug, insbesondere werkzeugtypspezifisch, gedämpft bzw. mindestens teilweise abgeschirmt und umfasst bzw. weist eine, insbesondere die und/oder werkzeugtypspezifische, Sender-Information für eine, insbesondere die, Berücksichtigung der Dämpfung auf. Das System umfasst bzw. weist, insbesondere die und/oder elektrische, Empfänger, eine, insbesondere elektrische, Erfassungseinrichtung und eine, insbesondere elektrische, Bestimmungseinrichtung bzw. Ermittlungseinrichtung auf. Die Empfänger sind jeweils zum, insbesondere automatischen, kabellosen Empfangen des gesendeten Signals und zum, insbesondere stationären, Anordnen an, insbesondere den, verschiedenen Empfänger-Positionen ausgebildet bzw. konfiguriert. Die Erfassungseinrichtung ist zum, insbesondere automatischen, Erfassen eines, insbesondere des, jeweiligen Empfangs-Signalstärkewerts des gesendeten, insbesondere und gegebenenfalls gedämpften, Signals an den Empfängern ausgebildet bzw. konfiguriert. Die Bestimmungseinrichtung ist zum, insbesondere automatischen, Bestimmen bzw. Ermitteln der Anwesenheit, insbesondere oder einer Abwesenheit, des Werkzeugs innerhalb des Werkzeug-Positionsbereichs und/oder der Werkzeug-Position, insbesondere Positionskoordinaten der Werkzeugs-Position, des Werkzeugs in Abhängigkeit der erfassten Empfangs-Signalstärkewerte und der empfangenen Sender-Information für die Berücksichtigung der Dämpfung ausgebildet bzw. konfiguriert.

Insbesondere kann das System zum Ausführen eines, insbesondere des, Verfahrens wie zuvor beschrieben ausgebildet sein. Zusätzlich oder alternativ kann die Bestimmungseinrichtung einen Computer aufweisen.

In einer Weiterbildung der Erfindung umfasst bzw. weist das System das Werkzeug und den, insbesondere elektrischen, Sender auf. Der Sender ist zum, insbesondere automatischen, kabellosen Senden des Signals ausgebildet bzw. konfiguriert. Das Werkzeug und der Sender sind zur mechanischen Verbindung miteinander bzw. Befestigung aneinander ausgebildet bzw. konfiguriert. Insbesondere ist mit dem Werkzeug der Sender, insbesondere unmittelbar, mechanisch verbunden bzw. an dem Werkzeug ist der Sender befestigt.

Das erfindungsgemäße motorangetriebene Werkzeug und der erfindungsgemäße Sender sind zur, insbesondere unmittelbaren, mechanischen Verbindung miteinander bzw. Befestigung aneinander ausgebildet bzw. konfiguriert. Insbesondere ist mit dem Werkzeug der Sender, insbesondere unmittelbar, mechanisch verbunden bzw. an dem Werkzeug ist der Sender befestigt. Der Sender ist zum, insbesondere automatischen und/oder kontinuierlichen, kabellosen Senden eines, insbesondere des, Signals ausgebildet bzw. konfiguriert. Das gesendete Signal wird durch das Werkzeug, insbesondere werkzeugtypspezifisch, gedämpft bzw. mindestens teilweise abgeschirmt, insbesondere falls mit dem Werkzeug der Sender mechanisch verbunden ist, und umfasst bzw. weist eine, insbesondere die, Sender-Information für eine Berücksichtigung der Dämpfung auf. Die Sender-Information umfasst bzw. weist, insbesondere den und/oder werkzeugtypspezifischen, mindestens einen Dämpfungswert der Dämpfung und/oder für verschiedene mögliche, insbesondere die verschiedenen möglichen, Werkzeug-Positionen, insbesondere und jeweils verschiedene mögliche, insbesondere die verschiedenen möglichen, Werkzeug-Ausrichtungen, des Werkzeugs, insbesondere innerhalb eines, insbesondere des, Werkzeug-Positionsbereichs, jeweils zugeordnete, insbesondere die jeweils zugeordneten und/oder werkzeugtypspezifischen, Vergleichs-Empfangs-Signalstärkewerte auf.

Insbesondere können das Werkzeug und der Sender bei einem Verfahren wie zuvor beschrieben, insbesondere zum Bestimmen einer, insbesondere der, Anwesenheit des Werkzeugs innerhalb eines, insbesondere des, Werkzeug-Positionsbereichs und/oder einer, insbesondere der, Werkzeug-Position des Werkzeugs, verwendet werden.

Die erfindungsgemäße, insbesondere elektrische, Vorrichtung ist für ein, insbesondere das, System, insbesondere wie zuvor beschrieben, zum Bestimmen einer, insbesondere der, Anwesenheit eines, insbesondere des, motorangetriebenen Werkzeugs innerhalb eines, insbesondere des, Werkzeug-Positionsbereichs und/oder einer, insbesondere der, Werkzeug-Position des Werkzeugs ausgebildet bzw. konfiguriert. Mit dem Werkzeug ist ein, insbesondere der, Sender mechanisch verbunden. Der Sender sendet ein, insbesondere das, Signal kabellos. Das gesendete Signal wird durch das Werkzeug gedämpft und weist eine, insbesondere die, Sender-Information für eine, insbesondere die, Berücksichtigung der Dämpfung auf. Die Vorrichtung umfasst bzw. weist eine, insbesondere elektrische, Bereitstellungseinrichtung auf. Die Bereitstellungseinrichtung ist zum, insbesondere automatischen, Bereitstellen mindestens einer, insbesondere der, Dämpfungs-Information basierend auf der Dämpfung, insbesondere mindestens eines, insbesondere des, Dämpfungswerts der Dämpfung, ausgebildet bzw. konfiguriert. Insbesondere ist der Dämpfungs-Information ein, insbesondere der, Identifikator des Senders und/oder des Werkzeugs oder eine, insbesondere die, dem Identifikator korrespondierende Identifikatorinformation, insbesondere logisch, zugeordnet. Insbesondere weist die Sender-Information den Identifikator oder die Identifikatorinformation auf.

Dies kann den/die Vorteil/e wie zuvor beschrieben ermöglichen.

Insbesondere kann das System zum Ausführen eines, insbesondere des, Verfahrens wie zuvor beschrieben ausgebildet sein. Zusätzlich oder alternativ braucht oder kann die Vorrichtung nicht die Empfänger und/oder die Erfassungseinrichtung und/oder die Bestimmungseinrichtung aufweisen. Insbesondere kann das System oder die Bestimmungseinrichtung die Vorrichtung und/oder die Bereitstellungseinrichtung aufweisen. Weiter zusätzlich oder alternativ kann die Vorrichtung oder die Bereitstellungseinrichtung eine, insbesondere die, Datenbank aufweisen, insbesondere sein. Weiter zusätzlich oder alternativ kann die Vorrichtung eine, insbesondere elektrische, Übertragungseinrichtung zum, insbesondere automatischen, Übertragen der, insbesondere bereitgestellten, Dämpfungs-Information, insbesondere zu der Bestimmungseinrichtung, aufweisen. Weiter zusätzlich oder alternativ kann die Vorrichtung eine, insbesondere die und/oder elektrische, Übertragungseinrichtung zum, insbesondere automatischen, Übertragen des Identifikators oder der Identifikatorinformation, insbesondere von mindestens einem der Empfänger und/oder der Erfassungseinrichtung, aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes System, ein erfindungsgemäßes motorangetriebenes Werkzeug und einen erfindungsgemäßen Sender und ein erfindungsgemäßes Verfahren,
- Fig. 2: das Werkzeug und der Sender der Fig. 1 und das Verfahren der Fig. 1, und
- Fig. 3: das Verfahren der Fig. 1, ein erfindungsgemäßes Verfahren, insbesondere des Verfahrens, und eine erfindungsgemäße Vorrichtung, insbesondere des Systems der Fig. 1.

### DETAILLIERTE BESCHREIBUNG DER AUSFÜHRUNGSBEISPIELE

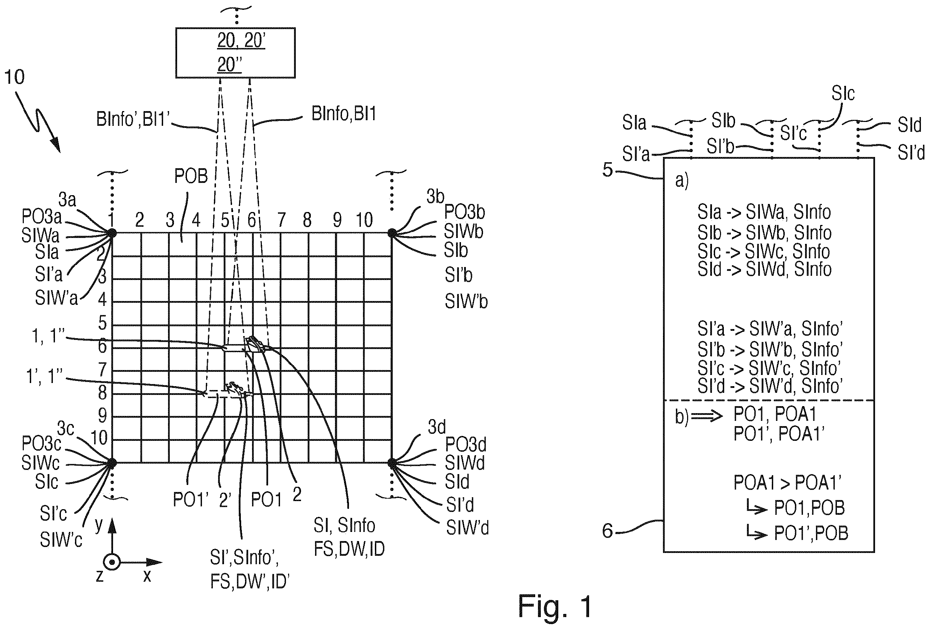

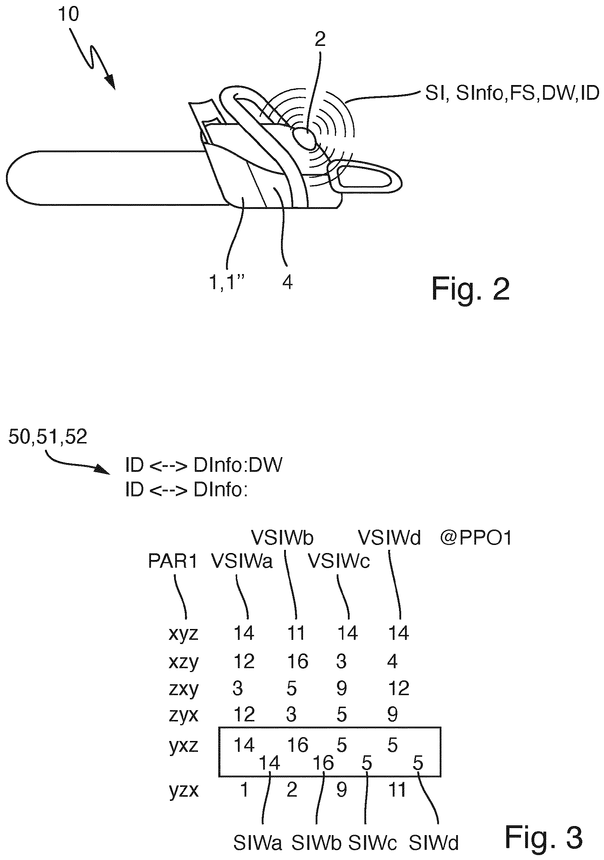

Fig. 1 und 2 zeigen ein erfindungsgemäßes System 10 zum Bestimmen einer Anwesenheit eines erfindungsgemäßen motorangetriebenen Werkzeugs 1 innerhalb eines Werkzeug-Positionsbereichs POB und/oder einer Werkzeug-Position PO1 des Werkzeugs 1. Mit dem Werkzeug 1 ist ein erfindungsgemäßer Sender 2 mechanisch verbunden. Der Sender 2 sendet kabellos ein Signal SI, insbesondere mittels einer Antenne des Senders 2. Das gesendete Signal SI wird durch das Werkzeug 1 gedämpft und weist eine Sender-Information Slnfo für eine Berücksichtigung der Dämpfung auf. Das System weist Empfänger 3a, 3b, 3c, d, eine Erfassungseinrichtung 5 und eine Bestimmungseinrichtung 6 auf. Die Empfänger 3a-d sind jeweils zum kabellosen Empfangen des gesendeten Signals SI, insbesondere jeweils mittels einer Antenne des Empfängers 3a-d, und zum Anordnen an verschiedenen Empfänger-Positionen PO3a, PO3b, PO3c, PO3d ausgebildet. Die Erfassungseinrichtung 5 ist zum Erfassen eines jeweiligen Empfangs-Signalstärkewerts SIWa, SIWb, SIWc, SIWd des gesendeten Signals SI an den Empfängern 3a-d ausgebildet. Die Bestimmungseinrichtung 6 ist zum Bestimmen der Anwesenheit des Werkzeugs 1 innerhalb des Werkzeug-Positionsbereichs POB und/oder der Werkzeug-Position PO1 des Werkzeugs 1 in Abhängigkeit der erfassten Empfangs-Signalstärkewerte SIWa-d und der empfangenen Sender-Information Slnfo für die Berücksichtigung der Dämpfung ausgebildet.

Im Detail weist das System 10 das Werkzeug 1 und den Sender 2 auf. Der Sender 2 ist zum kabellosen Senden des Signals SI ausgebildet. Das Werkzeug 1 und der Sender 2 sind zur mechanischen Verbindung miteinander ausgebildet.

Fig. 1 bis 3 zeigen ein erfindungsgemäßes Verfahren zum Bestimmen der Anwesenheit des motorangetriebenen Werkzeugs 1 innerhalb des Werkzeug-Positionsbereichs POB und/oder der Werkzeug-Position PO1 des Werkzeugs 1. Das Verfahren weist die Schritte auf: a) Erfassen eines jeweiligen Empfangs-Signalstärkewerts SIWa-d des gesendeten Signals an Empfängern 3a-d, insbesondere mittels der Erfassungseinrichtung 5. Die Empfänger 3a-d sind an den verschiedenen Empfänger-Positionen PO3a-d angeordnet. b) Bestimmen der Anwesenheit des Werkzeugs 1 innerhalb des Werkzeug-Positionsbereichs POB und/oder der Werkzeug-Position PO1 des Werkzeugs 1 in Abhängigkeit der erfassten Empfangs-Signalstärkewerte SIWa-d und der empfangenen Sender-Information Slnfo für die Berücksichtigung der Dämpfung, insbesondere mittels der Bestimmungseinrichtung 6.

Im Detail weist das Verfahren den Schritt auf: Senden des Signals SI, insbesondere mittels des Senders 2.

Des Weiteren weist das Verfahren den Schritt auf: jeweils Empfangen des gesendeten Signals SI, soweit nicht vollständig gedämpft, mittels der Empfänger 3a-d.

Außerdem weist das Verfahren den Schritt auf: Ausgeben einer benutzerwahrnehmbaren Information Blnfo über die, insbesondere bestimmte, Anwesenheit des Werkzeugs 1 innerhalb des Werkzeug-Positionsbereichs POB und/oder die, insbesondere bestimmte, Werkzeug-Position PO1 des Werkzeugs 1, insbesondere mittels einer Ausgabeeinrichtung 20 des Systems 10.

In dem gezeigten Ausführungsbeispiel ist der Werkzeug-Positionsbereich POB eine, insbesondere zweidimensionale, insbesondere rechteckige, Fläche und begrenzt.

Weiter ist in dem gezeigten Ausführungsbeispiel das Werkzeug 1 eine Säge 1". In alternativen Ausführungsbeispielen kann das Werkzeug ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, insbesondere ein Rasenmähroboter, ein Aufsitzrasenmäher oder ein Rasenmähtraktor, ein Vertikutierer, eine Grasschere, ein Häcksler, ein Gesteinsschneider, ein Hochdruckreiniger oder ein Spritz- und/oder Sprühgerät sein.

Zudem weist das Werkzeug ein Antriebsmotorsystem 4 auf. Das gesendete Signal SI wird durch das Antriebsmotorsystem 4 gedämpft.

Des Weiteren ist das, insbesondere gesendete, Signal SI ein Funksignal FS.

Außerdem wird das gesendete Signal SI durch das Werkzeug 1 anisotrop gedämpft.

Weiter weist der Schritt a) auf: Erfassen eines jeweiligen Empfangs-Signalstärkewerts SIWa-d des gesendeten Signals SI an mindestens vier Empfängern 3a-d. Die mindestens vier Empfänger 3a-d sind an mindestens vier verschiedenen Empfänger-Positionen PO3a-d angeordnet.

In dem gezeigten Ausführungsbeispiel weist das System 10 genau vier Empfänger 3a-d auf. Die vier Empfänger 3a-d sind an vier verschiedenen Empfänger-Positionen PO3a-d angeordnet. Insbesondere sind die vier Empfänger 3a-d an den vier Ecken des Werkzeug-Positionsbereichs POB angeordnet.

Zudem wird in dem gezeigten Ausführungsbeispiel die Werkzeug-Position PO1 des Werkzeugs 1 in zwei Dimensionen x, y, insbesondere definiert durch eine Ebene des Werkzeug-Positionsbereichs POB, bestimmt.

In alternativen Ausführungsbeispielen kann der Schritt a) aufweisen: Erfassen eines jeweiligen Empfangs-Signalstärkewerts des gesendeten Signals an mehr als vier Empfängern. Die mehr als vier Empfänger können an mehr als vier verschiedenen Empfänger-Positionen angeordnet sein.

Zusätzlich oder alternativ kann in alternativen Ausführungsbeispielen die Werkzeug-Position des Werkzeugs in drei Dimensionen bestimmt werden.

Des Weiteren weist die Sender-Information Slnfo mindestens einen Dämpfungswert DW der Dämpfung auf. Der Schritt b) weist auf: Bestimmen der Anwesenheit des Werkzeugs 1 innerhalb des Werkzeug-Positionsbereichs POB und/oder der Werkzeug-Position PO1 des Werkzeugs 1 in Abhängigkeit des mindestens einen empfangenen Dämpfungswerts DW der Dämpfung.

Außerdem weist die Sender-Information Slnfo einen Identifikator ID des Senders 2 und/oder des Werkzeugs 1 auf. Dem Identifikator ID ist eine Dämpfungs-Information Dlnfo basierend auf der Dämpfung zugeordnet. Der Schritt b) weist auf: Ermitteln der Dämpfungs-Information Dlnfo basierend auf der Dämpfung in Abhängigkeit des empfangenen Identifikators ID, und Bestimmen der Anwesenheit des Werkzeugs 1 innerhalb des Werkzeug-Positionsbereichs POB und/oder der Werkzeug-Position PO1 des Werkzeugs 1 in Abhängigkeit der ermittelten Dämpfungs-Information Dlnfo.

Weiter weist das Verfahren den Schritt auf: Vorgeben des mindestens einen Dämpfungswerts DW der Dämpfung und der verschiedenen Empfänger-Positionen PO3a-d der Empfänger 3a-d.

Der Schritt b) weist auf: Berechnen der Werkzeug-Position PO1 des Werkzeugs 1 in Abhängigkeit der erfassten Empfangs-Signalstärkewerte SIWa-d, des mindestens einen vorgegebenen Dämpfungswerts DW der Dämpfung und der vorgegebenen verschiedenen Empfänger-Positionen PO3a-d der Empfänger 3a-d.

Zudem weist das Verfahren den Schritt auf: Vorgeben für verschiedene mögliche Werkzeug-Positionen PP01, insbesondere und verschiedene mögliche Werkzeug-Ausrichtungen PAR1, des Werkzeugs 1, insbesondere innerhalb des Werkzeug-Positionsbereichs POB, jeweils zugeordnete Vergleichs-Empfangs-Signalstärkewerte VSIWa, VSIWb, VSIWc, VSIWd. Zusätzlich oder alternativ weist die Sender-Information Slnfo für die verschiedenen möglichen Werkzeug-Positionen PP01, insbesondere und die verschiedenen möglichen Werkzeug-Ausrichtungen PAR1, des Werkzeugs 1, insbesondere innerhalb des Werkzeug-Positionsbereichs POB, jeweils die zugeordneten Vergleichs-Empfangs-Signalstärkewerte VSIWa-d auf. Der Schritt b) weist auf: Vergleichen der erfassten Empfangs-Signalstärkewerte SIWa-d mit den Vergleichs-Empfangs-Signalstärkewerten VSIWa-d und Bestimmen der Anwesenheit des Werkzeugs 1 innerhalb des Werkzeug-Positionsbereichs POB und/oder der Werkzeug-Position PO1 des Werkzeugs 1 in Abhängigkeit eines Ergebnisses des Vergleichs.

Im gezeigten Ausführungsbeispiel weist die Dämpfungs-Information den mindestens einen Dämpfungswert DW und/oder für die verschiedenen möglichen Werkzeug-Positionen PP01, insbesondere und die verschiedenen möglichen Werkzeug-Ausrichtungen PAR1, jeweils die zugeordneten Vergleichs-Empfangs-Signalstärkewerte VSIWa-d auf, wie in Fig. 3 gezeigt.

Im Detail weist das Verfahren den Schritt auf: Berechnen für die verschiedenen möglichen Werkzeug-Positionen PP01, insbesondere und die verschiedenen möglichen Werkzeug-Ausrichtungen PAR1, des Werkzeugs 1, insbesondere innerhalb des Werkzeug-Positionsbereichs POB, jeweils die Vergleichs-Empfangs-Signalstärkewerte VSIWa-d in Abhängigkeit des mindestens einen vorgegebenen Dämpfungswerts DW der Dämpfung und der vorgegebenen verschiedenen Empfänger-Positionen PO3a-d der Empfänger 3a-d.

In dem gezeigten Ausführungsbeispiel sind die Empfangs-Signalstärkewerte SIWa-d 14, 16, 5 und 5, wie in Fig. 3 gezeigt.

Des Weiteren sind für zehn mal zehn gleich einhundert verschiedene, insbesondere rasterförmig angeordnete bzw. sektorenmäßig unterteilte, mögliche Werkzeug-Positionen PP01, insbesondere und jeweils sechs verschiedene mögliche Werkzeug-Ausrichtungen PARI, gleich sechshundert verschiedene Möglichkeiten des Werkzeugs 1, insbesondere innerhalb des Werkzeug-Positionsbereichs POB, jeweils zugeordnete Vergleichs-Empfangs-Signalstärkewerte VSIWa, VSIWb, VSIWc, VSIWd vorgegeben, insbesondere berechnet.

Außerdem sind die Vergleichs-Empfangs-Signalstärkewerte VSIWa-d 14, 16, 5 und 5 den erfassten Empfangs-Signalstärkewerten SIWa-d 14, 16, 5 und 5 am nächsten.

Somit werden die Vergleichs-Empfangs-Signalstärkewerte VSIWa-d 14, 16, 5 und 5 ausgewählt und basierend darauf wird die zugeordnete Werkzeug-Position PPO1 ausgewählt, insbesondere als die Werkzeug-Position PO1 bestimmt.

Somit werden/wird die Anwesenheit des Werkzeugs 1 innerhalb des Werkzeug-Positionsbereichs POB und/oder die Werkzeug-Position PO1 des Werkzeugs 1 in Abhängigkeit der erfassten Empfangs-Signalstärkewerte SIWa-d und der empfangenen Sender-Information Slnfo für die Berücksichtigung der Dämpfung bestimmt.

In alternativen Ausführungsbeispielen kann die Sender-Information, insbesondere entweder, den mindestens einen Dämpfungswert, oder den Identifikator, oder für die verschiedenen möglichen Werkzeug-Positionen des Werkzeugs jeweils die zugeordneten Vergleichs-Empfangs-Signalstärkewerte aufweisen. Zusätzlich oder alternativ kann in alternativen Ausführungsbeispielen der Schritt b) aufweisen: insbesondere entweder, Bestimmen der Anwesenheit des Werkzeugs innerhalb des Werkzeug-Positionsbereichs und/oder der Werkzeug-Position des Werkzeugs in Abhängigkeit des mindestens einen empfangenen Dämpfungswerts der Dämpfung, oder Ermitteln der Dämpfungs-Information basierend auf der Dämpfung in Abhängigkeit des empfangenen Identifikators und Bestimmen der Anwesenheit des Werkzeugs innerhalb des Werkzeug-Positionsbereichs und/oder der Werkzeug-Position des Werkzeugs in Abhängigkeit der ermittelten Dämpfungs-Information, oder Berechnen der Werkzeug-Position des Werkzeugs in Abhängigkeit der erfassten Empfangs-Signalstärkewerte, des mindestens einen vorgegebenen Dämpfungswerts der Dämpfung und der vorgegebenen verschiedenen Empfänger-Positionen der Empfänger, oder Vergleichen der erfassten Empfangs-Signalstärkewerte mit den Vergleichs-Empfangs-Signalstärkewerten und Bestimmen der Anwesenheit des Werkzeugs innerhalb des Werkzeug-Positionsbereichs und/oder der Werkzeug-Position des Werkzeugs in Abhängigkeit eines Ergebnisses des Vergleichs.

Weiter weist in dem gezeigten Ausführungsbeispiel das Ausgeben der benutzerwahrnehmbaren Information Blnfo ein Anzeigen, insbesondere ein Projizieren und/oder ein Einblenden, eines Bilds BI1 des Werkzeugs 1 innerhalb des Werkzeug-Positionsbereichs POB und/oder an der Werkzeug-Position PO1 des Werkzeugs 1 auf, insbesondere mittels der Ausgabeeinrichtung 20 in Form einer Anzeige 20', insbesondere einer Projektors 20".

Dies ermöglicht eine optische Kontrolle.

In alternativen Ausführungsbeispielen könnte das Bild mittels Augmented Reality auf einem Bildschirm, insbesondere eines mobilen Endgeräts, insbesondere eines Smartphones oder eines Tablets, eingeblendet werden.

Im Detail ist dem Identifikator ID das Bild BI1 des Werkzeugs 1 zugeordnet.

Zudem wird das gesendete Signal Sl durch ein weiteres Werkzeug 1' gedämpft und weist die Sender-Information Slnfo für eine Berücksichtigung der Dämpfung durch das Werkzeug 1 auf, wie in Fig. 1 gezeigt. Mit dem weiteren Werkzeug 1' ist ein weiterer Sender 2' mechanisch verbunden. Der weitere Sender 2' sendet kabellos ein weiteres Signal SI'. Das gesendete weitere Signal Sl' wird durch das weitere Werkzeug 1' und das Werkzeug 1 gedämpft und weist eine weitere Sender-Information Slnfo' für eine Berücksichtigung der Dämpfung durch das weitere Werkzeug 1' auf. Das Verfahren weist den Schritt auf: Erfassen eines jeweiligen weiteren Empfangs-Signalstärkewerts SIW'a, SIW'b, SIW'c, SIW'd des gesendeten weiteren Signals Sl' an den Empfängern 3a-d. Der Schritt b) weist auf: Bestimmen der Werkzeug-Position PO1 des Werkzeugs 1 in Abhängigkeit der erfassten Empfangs-Signalstärkewerte SIWa-d und der empfangenen Sender-Information Slnfo für die Berücksichtigung der Dämpfung durch das Werkzeug 1 und Bestimmen einer weiteren Werkzeug-Position PO1' des weiteren Werkzeugs 1' in Abhängigkeit der erfassten weiteren Empfangs-Signalstärkewerte SIWa-d und der empfangenen weiteren Sender-Information Slnfo' für die Berücksichtigung der Dämpfung durch das weitere Werkzeug 1 insbesondere wie zuvor beschrieben. Bestimmen einer Positionsbestimmungsgenauigkeit POA1, POA1' jeweils für die bestimmte Werkzeug-Position PO1 des Werkzeugs 1 und die bestimmte weitere Werkzeug-Position PO1' des weiteren Werkzeugs 1'. Behalten für das eine Werkzeug 1 mit einer höheren Positionsbestimmungsgenauigkeit POA1 die bestimmte Anwesenheit des einen Werkzeugs 1 innerhalb des Werkzeug-Positionsbereichs POB und/oder der bestimmten einen Werkzeug-Position PO1 des einen Werkzeugs 1. Bestimmen für das andere Werkzeug 1' mit einer geringeren Positionsbestimmungsgenauigkeit POA1' die Anwesenheit des anderen Werkzeugs 1' innerhalb des Werkzeug-Positionsbereichs POB und/oder der anderen Werkzeug-Position PO1' des anderen Werkzeugs 1' unter Berücksichtigung der Dämpfung durch das eine Werkzeug 1 an der bestimmten einen Werkzeug-Position PO1.

In dem gezeigten Ausführungsbeispiel ist die Positionsbestimmungsgenauigkeit POA1 für die bestimmte Werkzeug-Position PO1 des Werkzeugs 1 höher als die Positionsbestimmungsgenauigkeit POA1' für die bestimmte weitere Werkzeug-Position PO1' des weiteren Werkzeugs 1'.

Somit wird für das Werkzeug 1 mit der höheren Positionsbestimmungsgenauigkeit POA1 die bestimmte Anwesenheit des Werkzeugs 1 innerhalb des Werkzeug-Positionsbereichs POB und/oder die bestimmten Werkzeug-Position PO1 des einen Werkzeugs 1 behalten. Des Weiteren werden/wird somit für das weitere Werkzeug 1' mit der geringeren Positionsbestimmungsgenauigkeit POA1' die Anwesenheit des weiteren Werkzeugs 1' innerhalb des Werkzeug-Positionsbereichs POB und/oder die weitere Werkzeug-Position PO1' des weiteren Werkzeugs 1' unter Berücksichtigung der Dämpfung durch das Werkzeug 1 an der bestimmten Werkzeug-Position PO1 bestimmt.

Des Weiteren zeigt Fig. 3 eine erfindungsgemäße Vorrichtung 50 für das System 10 zum Bestimmen der Anwesenheit des motorangetriebenen Werkzeugs 1 innerhalb des Werkzeug-Positionsbereichs POB und/oder der Werkzeug-Position PO1 des Werkzeugs 1. Die Vorrichtung 50 weist eine Bereitstellungseinrichtung 51 auf. Die Bereitstellungseinrichtung 51 ist zum Bereitstellen mindestens der Dämpfungs-Information Dlnfo basierend auf der Dämpfung, insbesondere mindestens des Dämpfungswerts DW der Dämpfung, ausgebildet. Insbesondere ist der Dämpfungs-Information Dlnfo der Identifikator ID des Senders 2 und/oder des Werkzeugs 1 oder eine dem Identifikator korrespondierende Identifikatorinformation zugeordnet.

Insbesondere weist die Sender-Information Slnfo den Identifikator ID oder die Identifikatorinformation auf.

Im Detail weist das System 10 oder die Bestimmungseinrichtung 6 die Vorrichtung 50 und/oder die Bereitstellungseinrichtung 51 auf.

Fig. 3 zeigt ein erfindungsgemäßes Verfahren für das Verfahren zum Bestimmen der Anwesenheit des motorangetriebenen Werkzeugs 1 innerhalb des Werkzeug-Positionsbereichs POB und/oder der Werkzeug-Position PO1 des Werkzeugs 1. Das Verfahren weist den Schritt auf: Bereitstellen mindestens der Dämpfungs-Information Dlnfo basierend auf der Dämpfung, insbesondere mindestens des Dämpfungswerts DW der Dämpfung, insbesondere mittels der Bereitstellungseinrichtung 51 der Vorrichtung 50.

Im Detail weist der Schritt b) das Bereitstellen auf.

In dem gezeigten Ausführungsbeispiel weist die Vorrichtung 50 eine Übertragungseinrichtung 52 zum Übertragen der Dämpfungs-Information Dlnfo zu der Bestimmungseinrichtung 6 und/oder des Identifikators ID oder der Identifikatorinformation von mindestens einem der Empfänger 3a-d und/oder der Erfassungseinrichtung 5 auf.

Wie die gezeigten und oben erläuterten Ausführungsbeispiele deutlich machen, stellt die Erfindung ein vorteilhaftes Verfahren zum Bestimmen einer Anwesenheit eines motorangetriebenen Werkzeugs innerhalb eines Werkzeug-Positionsbereichs und/oder einer Werkzeug-Position des Werkzeugs, ein vorteilhaftes Verfahren für ein Verfahren zum Bestimmen einer Anwesenheit eines motorangetriebenen Werkzeugs innerhalb eines Werkzeug-Positionsbereichs und/oder einer Werkzeug-Position des Werkzeugs, ein vorteilhaftes System zum Bestimmen einer Anwesenheit eines motorangetriebenen Werkzeugs innerhalb eines Werkzeug-Positionsbereichs und/oder einer Werkzeug-Position des Werkzeugs, ein vorteilhaftes motorangetriebenes Werkzeug und einen vorteilhaften Sender und eine vorteilhafte Vorrichtung für ein System zum Bestimmen einer Anwesenheit eines motorangetriebenen Werkzeugs innerhalb eines Werkzeug-Positionsbereichs und/oder einer Werkzeug-Position des Werkzeugs bereit, das und/oder die jeweils verbesserte Eigenschaft aufweist/aufweisen, insbesondere eine hohe Genauigkeit ermöglicht/ermöglichen.

## Patentansprüche

1. Verfahren zum Bestimmen einer Anwesenheit eines motorangetriebenen Werkzeugs (1) innerhalb eines Werkzeug-Positionsbereichs (POB) und/oder einer Werkzeug-Position (PO1) des Werkzeugs (1), wobei mit dem Werkzeug (1) ein Sender (2) mechanisch verbunden ist, wobei der Sender (2) ein Signal (SI) kabellos sendet, wobei das gesendete Signal (SI) durch das Werkzeug (1) gedämpft wird und eine Sender-Information (Slnfo) für eine Berücksichtigung der Dämpfung aufweist, wobei das Verfahren die Schritte aufweist:
a) Erfassen eines jeweiligen Empfangs-Signalstärkewerts (SIWa-d) des gesendeten Signals (SI) an Empfängern (3a-d), wobei die Empfänger (3a-d) an verschiedenen Empfänger-Positionen (PO3a-d) angeordnet sind, und
b) Bestimmen der Anwesenheit des Werkzeugs (1) innerhalb des Werkzeug-Positionsbereichs (POB) und/oder der Werkzeug-Position (PO1) des Werkzeugs (1) in Abhängigkeit der erfassten Empfangs-Signalstärkewerte (SIWa-d) und der empfangenen Sender-Information (Slnfo) für die Berücksichtigung der Dämpfung.

2. Verfahren nach Anspruch 1,
- wobei das Werkzeug (1) ein Antriebsmotorsystem (4) aufweist, und
- wobei das gesendete Signal (SI) durch das Antriebsmotorsystem (4) gedämpft wird.

3. Verfahren nach einem der vorhergehenden Ansprüche,
- wobei das, insbesondere gesendete, Signal (SI) ein Funksignal (FS) ist, und/oder
- wobei das gesendete Signal (SI) durch das Werkzeug (1) anisotrop gedämpft wird.

4. Verfahren nach einem der vorhergehenden Ansprüche,
- wobei der Schritt a) aufweist: Erfassen eines jeweiligen Empfangs-Signalstärkewerts (SIWa-d) des gesendeten Signals (SI) an mindestens vier Empfängern (3a-d), wobei die mindestens vier Empfänger (3a-d) an mindestens vier verschiedenen Empfänger-Positionen (PO3a-d) angeordnet sind.

5. Verfahren nach einem der vorhergehenden Ansprüche,
- wobei die Sender-Information (Slnfo) mindestens einen Dämpfungswert (DW) der Dämpfung aufweist,
- wobei der Schritt b) aufweist: Bestimmen der Anwesenheit des Werkzeugs (1) innerhalb des Werkzeug-Positionsbereichs (POB) und/oder der Werkzeug-Position (PO1) des Werkzeugs (1) in Abhängigkeit des mindestens einen empfangenen Dämpfungswerts (DW) der Dämpfung.

6. Verfahren nach einem der vorhergehenden Ansprüche,
- wobei die Sender-Information (Slnfo) einen Identifikator (ID) des Senders (2) und/oder des Werkzeugs (1) aufweist, wobei dem Identifikator (ID) eine Dämpfungs-Information (Dlnfo) basierend auf der Dämpfung, insbesondere mindestens ein Dämpfungswert (DW) der Dämpfung, zugeordnet ist,
- wobei der Schritt b) aufweist: Ermitteln der Dämpfungs-Information (Dlnfo) basierend auf der Dämpfung in Abhängigkeit des empfangenen Identifikators (ID), und Bestimmen der Anwesenheit des Werkzeugs (1) innerhalb des Werkzeug-Positionsbereichs (POB) und/oder der Werkzeug-Position (PO1) des Werkzeugs (1) in Abhängigkeit der ermittelten Dämpfungs-Information (Dlnfo), insbesondere des mindestens einen ermittelten Dämpfungswerts (DW) der Dämpfung.

7. Verfahren nach einem der vorhergehenden Ansprüche, insbesondere nach Anspruch 5 oder 6,
- wobei das Verfahren den Schritt aufweist: Vorgeben mindestens eines Dämpfungswerts (DW) der Dämpfung und der verschiedenen Empfänger-Positionen (PO3a-d) der Empfänger (3a-d), und
- wobei der Schritt b) aufweist: Berechnen der Werkzeug-Position (PO1) des Werkzeugs (1) in Abhängigkeit der erfassten Empfangs-Signalstärkewerte (SIWa-d), des mindestens einen vorgegebenen Dämpfungswerts (DW) der Dämpfung und der vorgegebenen verschiedenen Empfänger-Positionen (PO3a-d) der Empfänger (3a-d).

8. Verfahren nach einem der vorhergehenden Ansprüche, insbesondere nach Anspruch 5 oder 6,
- wobei das Verfahren den Schritt aufweist: Vorgeben für verschiedene mögliche Werkzeug-Positionen (PPO1), insbesondere und verschiedene mögliche Werkzeug-Ausrichtungen (PARI), des Werkzeugs (1), insbesondere innerhalb des Werkzeug-Positionsbereichs (POB), jeweils zugeordnete Vergleichs-Empfangs-Signalstärkewerte (VSIWa-d), und/oder wobei die Sender-Information (Slnfo) für die verschiedenen möglichen Werkzeug-Positionen (PPO1), insbesondere und die verschiedenen möglichen Werkzeug-Ausrichtungen (PARI), des Werkzeugs (1), insbesondere innerhalb des Werkzeug-Positionsbereichs (POB), jeweils die zugeordneten Vergleichs-Empfangs-Signalstärkewerte (VSIWa-d) aufweist, und
- wobei der Schritt b) aufweist: Vergleichen der erfassten Empfangs-Signalstärkewerte (SIWa-d) mit den Vergleichs-Empfangs-Signalstärkewerten (VSIWa-d) und Bestimmen der Anwesenheit des Werkzeugs (1) innerhalb des Werkzeug-Positionsbereichs (POB) und/oder der Werkzeug-Position (PO1) des Werkzeugs (1) in Abhängigkeit eines Ergebnisses des Vergleichs.

9. Verfahren nach Anspruch 8,
- wobei das Verfahren den Schritt aufweist: Vorgeben mindestens eines Dämpfungswerts (DW) der Dämpfung und der verschiedenen Empfänger-Positionen (PO3a-d) der Empfänger (3a-d), und
- wobei das Verfahren den Schritt aufweist: Berechnen für die verschiedenen möglichen Werkzeug-Positionen (PPO1), insbesondere und die verschiedenen möglichen Werkzeug-Ausrichtungen (PARI), des Werkzeugs (1), insbesondere innerhalb des Positionsbereichs (POB), jeweils die Vergleichs-Empfangs-Signalstärkewerte (VSIWa-d) in Abhängigkeit des mindestens einen vorgegebenen Dämpfungswerts (DW) der Dämpfung und der vorgegebenen verschiedenen Empfänger-Positionen (PO3a-d) der Empfänger (3a-d).

10. Verfahren nach einem der vorhergehenden Ansprüche,
- wobei das gesendete Signal (SI) durch ein weiteres Werkzeug (1') gedämpft wird und die Sender-Information (Slnfo) für eine Berücksichtigung der Dämpfung durch das Werkzeug (1) aufweist, wobei mit dem weiteren Werkzeug (1') ein weiterer Sender (2') mechanisch verbunden ist, wobei der weitere Sender (2') ein weiteres Signal (SI') kabellos sendet, wobei das gesendete weitere Signal (SI') durch das weitere Werkzeug (1') und das Werkzeug (1) gedämpft wird und eine weitere Sender-Information (SInfo') für eine Berücksichtigung der Dämpfung durch das weitere Werkzeug (1') aufweist,
- wobei das Verfahren den Schritt aufweist: Erfassen eines jeweiligen weiteren Empfangs-Signalstärkewerts (SIW'a-d) des gesendeten weiteren Signals (SI') an den Empfängern (3a-d), und
- wobei der Schritt b) aufweist:
- Bestimmen der Werkzeug-Position (PO1) des Werkzeugs (1) in Abhängigkeit der erfassten Empfangs-Signalstärkewerte (SIWa-d) und der empfangenen Sender-Information (Slnfo) für die Berücksichtigung der Dämpfung durch das Werkzeug (1) und Bestimmen einer weiteren Werkzeug-Position (PO1') des weiteren Werkzeugs (1') in Abhängigkeit der erfassten weiteren Empfangs-Signalstärkewerte (SIWa-d) und der empfangenen weiteren Sender-Information (SInfo) für die Berücksichtigung der Dämpfung durch das weitere Werkzeug (1'),
- Bestimmen einer Positionsbestimmungsgenauigkeit (POA1, POA1') jeweils für die bestimmte Werkzeug-Position (PO1) des Werkzeugs (1) und die bestimmte weitere Werkzeug-Position (PO1') des weiteren Werkzeugs (1'),
- Behalten für das eine Werkzeug (1) mit einer höheren Positionsbestimmungsgenauigkeit (POA1) die bestimmte Anwesenheit des einen Werkzeugs (1) innerhalb des Werkzeug-Positionsbereichs (POB) und/oder der bestimmten einen Werkzeug-Position (PO1) des einen Werkzeugs (1), und
- Bestimmen für das andere Werkzeug (1') mit einer geringeren Positionsbestimmungsgenauigkeit (POA1') die Anwesenheit des anderen Werkzeugs (1') innerhalb des Werkzeug-Positionsbereichs (POB) und/oder der anderen Werkzeug-Position (PO1') des anderen Werkzeugs (1') unter Berücksichtigung der Dämpfung durch das eine Werkzeug (1) an der bestimmten einen Werkzeug-Position (PO1).

11. Verfahren für ein Verfahren zum Bestimmen einer Anwesenheit eines motorangetriebenen Werkzeugs (1) innerhalb eines Werkzeug-Positionsbereichs (POB) und/oder einer Werkzeug-Position (PO1) des Werkzeugs (1), wobei mit dem Werkzeug (1) ein Sender (2) mechanisch verbunden ist, wobei der Sender (2) ein Signal (SI) kabellos sendet, wobei das gesendete Signal (SI) durch das Werkzeug (1) gedämpft wird und eine Sender-Information (Slnfo) für eine Berücksichtigung der Dämpfung aufweist, insbesondere nach einem der vorhergehenden Ansprüche, wobei das Verfahren den Schritt aufweist:
- Bereitstellen mindestens einer Dämpfungs-Information (Dlnfo) basierend auf der Dämpfung, insbesondere mindestens eines Dämpfungswerts (DW) der Dämpfung, insbesondere wobei der Dämpfungs-Information (Dlnfo) ein Identifikator (ID) des Senders (2) und/oder des Werkzeugs (1) oder eine dem Identifikator korrespondierende Identifikatorinformation zugeordnet ist, insbesondere wobei die Sender-Information (Slnfo) den Identifikator (ID) oder die Identifikatorinformation aufweist.

12. System (10) zum Bestimmen einer Anwesenheit eines motorangetriebenen Werkzeugs (1) innerhalb eines Werkzeug-Positionsbereichs (POB) und/oder einer Werkzeug-Position (PO1) des Werkzeugs (1), wobei mit dem Werkzeug (1) ein Sender (2) mechanisch verbunden ist, wobei der Sender (2) ein Signal (SI) kabellos sendet, wobei das gesendete Signal (SI) durch das Werkzeug (1) gedämpft wird und eine Sender-Information (Slnfo) für eine Berücksichtigung der Dämpfung aufweist, wobei das System (10) aufweist:
- Empfänger (3a-d), wobei die Empfänger jeweils zum kabellosen Empfangen des gesendeten Signals (SI) und zum Anordnen an verschiedenen Empfänger-Positionen (PO3a-d) ausgebildet sind,
- eine Erfassungseinrichtung (5), wobei die Erfassungseinrichtung (5) zum Erfassen eines jeweiligen Empfangs-Signalstärkewerts (SIWa-d) des gesendeten Signals (SI) an den Empfängern (3a-d) ausgebildet ist, und
- eine Bestimmungseinrichtung (6), wobei die Bestimmungseinrichtung (6) zum Bestimmen der Anwesenheit des Werkzeugs (1) innerhalb des Werkzeug-Positionsbereichs (POB) und/oder der Werkzeug-Position (PO1) des Werkzeugs (1) in Abhängigkeit der erfassten Empfangs-Signalstärkewerte (SIWa-d) und der empfangenen Sender-Information (Slnfo) für die Berücksichtigung der Dämpfung ausgebildet ist.

13. System (10) nach Anspruch 12, wobei das System (10) aufweist:
- das Werkzeug (1), und
- den Sender (2), wobei der Sender (2) zum kabellosen Senden des Signals (SI) ausgebildet ist,
- wobei das Werkzeug (1) und der Sender (2) zur mechanischen Verbindung miteinander ausgebildet sind, insbesondere wobei mit dem Werkzeug (1) der Sender (2) mechanisch verbunden ist.

14. Motorangetriebenes Werkzeug (1) und Sender (2),
- wobei das Werkzeug (1) und der Sender (2) zur mechanischen Verbindung miteinander ausgebildet sind, insbesondere wobei mit dem Werkzeug (1) der Sender (2) mechanisch verbunden ist, und
- wobei der Sender (2) zum kabellosen Senden eines Signals (SI) ausgebildet ist, wobei das gesendete Signal (SI) durch das Werkzeug (1) gedämpft wird und eine Sender-Information (Slnfo) für eine Berücksichtigung der Dämpfung aufweist, wobei die Sender-Information (Slnfo) mindestens einen Dämpfungswert (DW) der Dämpfung und/oder für verschiedene mögliche Werkzeug-Positionen (PPO1), insbesondere und verschiedene mögliche Werkzeug-Ausrichtungen (PARI), des Werkzeugs (1), insbesondere innerhalb eines Werkzeug-Positionsbereichs (POB), jeweils zugeordnete Vergleichs-Empfangs-Signalstärkewerte (VSIWa-d) aufweist.

15. Vorrichtung (50) für ein System (10) zum Bestimmen einer Anwesenheit eines motorangetriebenen Werkzeugs (1) innerhalb eines Werkzeug-Positionsbereichs (POB) und/oder einer Werkzeug-Position (PO1) des Werkzeugs (1), wobei mit dem Werkzeug (1) ein Sender (2) mechanisch verbunden ist, wobei der Sender (2) ein Signal (SI) kabellos sendet, wobei das gesendete Signal (SI) durch das Werkzeug (1) gedämpft wird und eine Sender-Information (Slnfo) für eine Berücksichtigung der Dämpfung aufweist, insbesondere nach Anspruch 12 oder 13, wobei die Vorrichtung (50) aufweist:
- eine Bereitstellungseinrichtung (51), wobei die Bereitstellungseinrichtung (51) zum Bereitstellen mindestens einer Dämpfungs-Information (Dlnfo) basierend auf der Dämpfung, insbesondere mindestens eines Dämpfungswerts (DW) der Dämpfung, ausgebildet, insbesondere wobei der Dämpfungs-Information (Dlnfo) ein Identifikator (ID) des Senders (2) und/oder des Werkzeugs (1) oder eine dem Identifikator korrespondierende Identifikatorinformation zugeordnet ist, insbesondere wobei die Sender-Information (Slnfo) den Identifikator (ID) oder die Identifikatorinformation aufweist.
